# EUROPEAN PATENT APPLICATION

(11) **EP 4 822 052 A1**
(43) Date of publication of application: **14.10.2026**
(21) Application number: 24900753.5
(22) Date of filing: 09.05.2024
(51) Int. Cl.: C22C 38/04, C22C 38/02, C23C 2/06, C23C 2/40, C21D 8/02, C21D 9/46

(54) **ULTRAHIGH-STRENGTH GALVANIZED STEEL SHEET AND MANUFACTURING METHOD THEREFOR**

(30) Priority: 08.12.2023 KR 20230177341
(71) Applicant: Hyundai Steel Company, Incheon 22525 (KR)
(72) Inventor: JANG, Min Ho, Incheon 22525 (KR); LA, Joung Hyun, Incheon 22525 (KR); HAN, Seong Kyung, Incheon 22525 (KR); PARK, Min Suh, Incheon 22525 (KR)
(74) Representative: Viering, Jentschura & Partner mbB Patent- und Rechtsanwälte
(86) International application number: PCT/KR2024/006220
(87) International publication number: WO 2025/121563

(57) **Abstract**

The present invention provides an ultra-high-strength plated steel sheet comprising a steel sheet with an inner layer portion and a surface layer portion and a plating layer, wherein the surface layer portion has a thickness of 10 µm to 50 µm from the surface, the inner layer portion contains, in wt%, C: 0.1% to 0.3%, Si: 1.0% to 2.0%, Mn: 2.5% to 3.5%, P: not more than 0.02%, and S: not more than 0.01%, with a balance of iron, and has a tempered martensite area fraction of 50% or more, the surface layer portion has a lower carbon content and a tempered martensite area fraction of 10% or less, and the plated steel sheet achieves a yield strength of 850 to 1070 MPa, a tensile strength of 1180 MPa or more and less than 1470 MPa, and an elongation of 14% or more.

## Description

### TECHNICAL FIELD

The present invention relates to a steel sheet and a method for manufacturing the same, and more particularly, to an ultra-high-strength plated steel sheet and a method for manufacturing the same.

### BACKGROUND ART

The automobile industry has focused on improving fuel efficiency and reducing weight in response to the demands of the times, such as depletion of resources, the rapid progress of global warming, and high oil prices. In addition, as regulations regarding passenger safety are gradually increasing, there is a growing demand for ultra-high-strength steel materials. Further, various improvements have been required for plated steel sheets having excellent sacrificial corrosion resistance, in which zinc having a lower potential is preferentially dissolved upon exposure to a corrosive environment, thereby preventing corrosion of the steel material.

For example, there has been an increasing demand for improvement of a liquid metal embrittlement (LME) problem in which, during resistance spot welding in an automobile assembly line, a plating layer melts and molten metallic zinc penetrates toward an interface of retained austenite present in a surface layer portion of a steel sheet, thereby causing brittleness.

Specifically, during spot welding of an ultra-high-strength hot-dip plated steel sheet, in the case of a galvanized steel sheet (GI), the melting point of the plating layer is as low as 420°C, and even in the case of a galvannealed steel sheet, liquid zinc may be formed due to a peritectic reaction in the vicinity of 780°C. The formed liquid zinc may penetrate along grain boundaries of the base material in a region in which a load is generated by welding electrodes at a high temperature, and the strength of the steel sheet, which is the base material, may be rapidly degraded by heat. Around an LME crack, phase transformation from austenite to alphaFe(Zn) occurs at a high temperature due to zinc diffused toward the base material side, and brittleness is further accelerated by the alphaFe(Zn) phase. The sensitivity increases as the amount of the austenite phase increases. The occurrence frequency of liquid metal embrittlement (LME) may increase as the silicon content of the material or the martensitic microstructure increases.

As a related prior art document, Korean Patent Publication No. 20200075949A is known.

### DETAILED DESCRIPTION OF THE INVENTION

### TECHNICAL PROBLEM

The present invention provides an ultra-high-strength plated steel sheet in which liquid metal embrittlement is improved, and a method for manufacturing the same.

However, the foregoing problem is exemplary, and the technical idea of the present invention is not limited thereto.

### TECHNICAL SOLUTION

According to an aspect of the present invention, there is provided an ultra-high-strength plated steel sheet. The ultra-high-strength plated steel sheet is a plated steel sheet including: a steel sheet including an inner layer portion and a surface layer portion on the inner layer portion; and a plating layer on the steel sheet, wherein the surface layer portion has a thickness of 10 µm to 50 µm from a surface of the steel sheet, wherein the inner layer portion comprises, in wt%, C: 0.1% to 0.3%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities, wherein a final microstructure of the inner layer portion has an area fraction of tempered martensite of 50% or more, wherein the surface layer portion has a carbon content lower than a carbon content of the inner layer portion, comprises, in wt%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities, wherein a final microstructure of the surface layer portion has an area fraction of tempered martensite of 10% or less, and wherein the plated steel sheet has a yield strength (YS) of 850 MPa or more and 1070 MPa or less, a tensile strength (TS) of 1180 MPa or more and less than 1470 MPa, and an elongation of 14% or more.

In the ultra-high-strength plated steel sheet, the surface layer portion may have a carbon content of 10% or less of the carbon content of the inner layer portion.

In the ultra-high-strength plated steel sheet, the final microstructure of the inner layer portion may include, in area fraction, tempered martensite: 50% to 75%, ferrite: 5% to 25%, and retained austenite: 10% to 30%, and the final microstructure of the surface layer portion may include, in area fraction, tempered martensite: more than 0% and not more than 10%, and ferrite: 90% or more and less than 100%.

When spot welding is performed on the plated steel sheet under conditions of a welding electrode tip diameter of 6 mm, an electrode force of 3.5 kN, and a welding current of 6.0 kA to 7.5 kA, a maximum length of a liquid metal embrittlement (LME) crack in the steel sheet may be 50 µm or less.

According to another aspect of the present invention, there is provided a method for manufacturing an ultra-high-strength plated steel sheet. The method includes: a first step of providing a steel sheet including an inner layer portion and a surface layer portion on the inner layer portion; and a second step of forming a plating layer on the steel sheet, wherein the inner layer portion comprises, in wt%, C: 0.1% to 0.3%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities, wherein a final microstructure of the inner layer portion has an area fraction of tempered martensite of 50% or more, wherein the surface layer portion has a carbon content lower than a carbon content of the inner layer portion, comprises, in wt%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities, wherein a final microstructure of the surface layer portion has an area fraction of tempered martensite of 10% or less, wherein the surface layer portion has a thickness of 10 µm to 50 µm from a surface of the steel sheet, and wherein the plated steel sheet has a yield strength of 850 MPa or more and 1070 MPa or less, a tensile strength of 1180 MPa or more and less than 1470 MPa, and an elongation of 14% or more.

In the method for manufacturing the ultra-high-strength plated steel sheet, the first step may sequentially include: providing a steel material comprising, in wt%, C: 0.1% to 0.3%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities; hot rolling the steel material; cold rolling the hot-rolled steel material; annealing the cold-rolled steel material in an annealing furnace; slowly cooling the annealed steel material at a first cooling rate; rapidly cooling the slowly cooled steel material at a second cooling rate greater than the first cooling rate; and reheating the rapidly cooled steel material, wherein, in the annealing step, a dew point temperature in the annealing furnace is controlled to be -20°C to +20°C, a lower limit of an annealing temperature range is controlled to be a temperature 30°C lower than an Ac3 temperature of the inner layer portion, and an upper limit of the annealing temperature range is controlled to be an Ac3 temperature of the surface layer portion, wherein the slowly cooling step is performed under conditions of the first cooling rate of 1 to 10°C/s and a cooling end temperature of 600°C or more and less than 800°C, wherein the rapidly cooling step is performed under conditions of the second cooling rate of 30 to 100°C/s and a cooling end temperature of 150°C or more and less than 300°C, and wherein the reheating step is performed under conditions of a holding time of 60 seconds or less at a temperature of more than 350°C and less than 500°C.

In the method for manufacturing the ultra-high-strength plated steel sheet, the surface layer portion may have a carbon content of 10% or less of the carbon content of the inner layer portion and may have a thickness of 10 µm to 50 µm from the surface of the steel sheet.

In the method for manufacturing the ultra-high-strength plated steel sheet, after the annealing step, the steel sheet is divided into an inner layer portion and a surface layer portion on the inner layer portion, having different carbon contents from each other, the microstructure of the inner layer portion may include, in area fraction, austenite: 75% to 95% and ferrite: 5% to 25%, and the microstructure of the surface layer portion may include, in area fraction, austenite: more than 0% and not more than 10%, and ferrite: 90% or more and less than 100%; after the slowly cooling step, the microstructure of the inner layer portion may include, in area fraction, austenite: 75% to 95% and ferrite: 5% to 25%, and the microstructure of the surface layer portion may include, in area fraction, austenite: more than 0% and not more than 10%, and ferrite: 90% or more and less than 100%; after the rapidly cooling step, the microstructure of the inner layer portion may include, in area fraction, martensite: 50% to 75%, ferrite: 5% to 25%, and retained austenite: 10% to 30%, and the microstructure of the surface layer portion may include, in area fraction, martensite: more than 0% and not more than 10%, and ferrite: 90% or more and less than 100%; and after the reheating step, the final microstructure of the inner layer portion may include, in area fraction, tempered martensite: 50% to 75%, ferrite: 5% to 25%, and retained austenite: 10% to 30%, and the final microstructure of the surface layer portion may include, in area fraction, tempered martensite: more than 0% and not more than 10%, and ferrite: 90% or more and less than 100%.

In the method for manufacturing the ultra-high-strength plated steel sheet, the hot rolling step may be performed under conditions of a slab reheating temperature of 1150°C to 1250°C, a finish rolling temperature of 850°C to 1000°C, and a coiling temperature of 500°C to 700°C, and the cold rolling step may be performed under a reduction ratio of 40% to 60%.

### ADVANTAGEOUS EFFECTS

According to the present invention, an ultra-high-strength plated steel sheet having excellent weldability and a method for manufacturing the same may be provided.

The effects of the present invention described above are exemplarily described, and the scope of the present invention is not limited by these effects.

### DESCRIPTION OF THE DRAWINGS

FIG. 1 is a flowchart schematically illustrating a method for manufacturing an ultra-high-strength plated steel sheet according to an embodiment of the present invention.
FIG. 2 is a graph illustrating subsequent heat treatment steps (annealing, cooling, and reheating) applied to a cold-rolled steel sheet in a method for manufacturing an ultra-high-strength plated steel sheet having excellent weldability according to an embodiment of the present invention.
FIG. 3 is a view schematically illustrating a process in which an ultra-high-strength plated steel sheet is formed in a method for manufacturing an ultra-high-strength plated steel sheet having excellent weldability according to an embodiment of the present invention.
FIG. 4 is a view schematically illustrating an outline of a decarburization reaction in a method for manufacturing an ultra-high-strength plated steel sheet according to an embodiment of the present invention.
FIG. 5 is a photograph showing a state in which a liquid metal embrittlement crack is generated in a plated steel sheet as a comparative example of the present invention.
FIG. 6 is a view showing results of applying a spot welding process in a first experimental example.
FIG. 7 is a view showing a product of a square root of annealing time (A), A^{1/2}, and a natural logarithm value of a reciprocal of a moisture concentration (B), ln(1/B), in an annealing furnace in a second experimental example.
FIG. 8 is a view showing a thickness of a decarburized layer formed in a surface layer of a steel sheet according to annealing time (A) and moisture concentration (B) in an annealing furnace in the second experimental example.
FIG. 9 is a view showing an occurrence rate of liquid metal embrittlement (LME) according to annealing time (A) and moisture concentration (B) in an annealing furnace in the second experimental example.

### MODE OF THE INVENTION

Hereinafter, preferred embodiments of the present invention will be described in detail with reference to the accompanying drawings. The embodiments of the present invention are provided to more completely explain the technical idea of the present invention to those skilled in the art, and the embodiments below may be modified into various other forms, and the scope of the technical idea of the present invention is not limited to the embodiments below. Rather, these embodiments are provided so that this disclosure will be more faithful and complete and so that the technical idea of the present invention will be fully conveyed to those skilled in the art. In the present specification, like reference numerals refer to like elements throughout. Further, various elements and regions in the drawings are schematically illustrated. Accordingly, the technical idea of the present invention is not limited by relative sizes or spacings shown in the accompanying drawings.

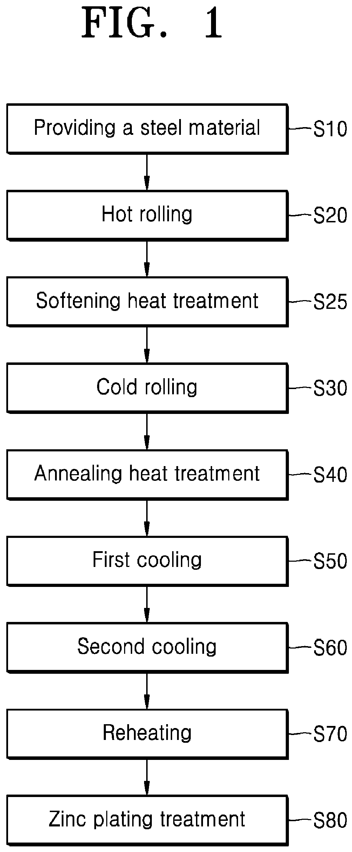

FIG. 1 is a flowchart schematically illustrating a method for manufacturing an ultra-high-strength plated steel sheet according to an embodiment of the present invention.

Referring to FIG. 1, the method for manufacturing an ultra-high-strength plated steel sheet according to an embodiment of the present invention includes: providing a steel material (S10); hot rolling the steel material to form a hot-rolled steel sheet (S20); cold rolling the hot-rolled steel sheet to form a cold-rolled steel sheet (S30); annealing the cold-rolled steel sheet (S40); slowly cooling the annealed steel sheet at a first cooling rate (S50); rapidly cooling the slowly cooled steel sheet at a second cooling rate greater than the first cooling rate (S60); reheating the cooled steel sheet (S70); and performing zinc plating treatment on the steel sheet (S80).

According to the method for manufacturing an ultra-high-strength plated steel sheet having excellent weldability according to the technical idea of the present invention, in the step (S40) of annealing the cold-rolled steel sheet in the annealing furnace, a dew point temperature in the annealing furnace is controlled in a predetermined high-dew-point range relative to the related art, thereby inducing a decarburization reaction in a surface layer portion including the surface of the steel sheet within a predetermined range so that the surface layer portion and an inner layer portion have different carbon contents. Accordingly, Ac3 temperatures of the surface layer portion and the inner layer portion become different from each other, such that phase transformation behaviors of the surface layer portion and the inner layer portion proceed differently even within a predetermined annealing temperature range. As a result, fractions of martensite in final microstructures of the surface layer portion and the inner layer portion are manifested differently, so that the possibility of occurrence of liquid metal embrittlement (LME), in which the plating layer melts and penetrates into the surface of the steel sheet during welding of the plated steel sheet to induce brittleness, may be minimized or suppressed, while simultaneously providing an ultra-high-strength plated steel sheet.

Hereinafter, the method for manufacturing an ultra-high-strength plated steel sheet having excellent weldability according to an embodiment of the present invention will be described in detail.

### Providing Steel Material (S10)

Recently, in the automobile industry, interest in lightweight vehicle bodies using ultra-high-strength steel has increased in order to simultaneously satisfy crash safety and fuel-efficiency regulations. In the steel industry, studies on development of ultra-high-strength steel materials have been actively conducted in response to such demands of automobile manufacturers. Q&P (quenching and partitioning) heat treatment technology, which has been developed to simultaneously secure high strength and high ductility of automotive steel materials, is a technology in which formation of carbide precipitates of carbon discharged from a martensitic structure during quenching is suppressed and carbon is allowed to diffuse into a retained austenite structure through partitioning. Through re-diffusion of carbon, the retained austenite structure is stabilized even at room temperature, and ultimately both high ductility by the retained austenite structure and high strength by the martensitic structure may be secured.

Such a Q&P steel sheet contains, compared to general steel, a large amount of silicon (Si), which interferes with movement of iron (Fe) atoms, in order to suppress formation of carbide precipitates in the structure. Further, in order to increase a volume fraction of the stabilized retained austenite structure and thereby improve TRIP (Transformation-Induced Plasticity) behavior, the Q&P steel sheet contains a large amount of austenite-stabilizing alloying elements such as carbon (C) and manganese (Mn).

Meanwhile, it is obvious that the technical idea of the present invention may be applied to the Q&P steel sheet described above, but the technical idea of the present invention may be broadly applied to various steel sheets and is not limited only to the Q&P steel sheet.

Hereinafter, exemplary roles and contents of components included in a steel sheet (base material) constituting an ultra-high-strength plated steel sheet according to an embodiment of the present invention will be described. In this case, all contents of the component elements mean wt%.

### Carbon (C): 0.1% to 0.3%

Carbon is the most important alloying element in steelmaking, and has basic strengthening and austenite stabilization as main purposes. A high carbon concentration in austenite improves the stability of austenite and facilitates securing an appropriate amount of austenite for improving material properties. When the carbon content is less than 0.1%, it is difficult to secure a desired yield strength and elongation. On the other hand, when the carbon content is greater than 0.3%, weldability may be lowered due to an increase in carbon equivalent. Accordingly, the carbon content is preferably 0.1% to 0.3% based on a total weight of the steel sheet.

### Silicon (Si): 1.0% to 2.0%

Silicon is an element that suppresses formation of carbides (for example, Fe₃C) in ferrite and increases carbon activity, thereby increasing a diffusion rate of austenite. Silicon is also well known as a ferrite-stabilizing element and is known as an element that increases a ferrite fraction during cooling to increase ductility. When the silicon content is less than 1.0%, an effect of adding silicon is insufficient. On the other hand, when the silicon content is greater than 2.0%, an oxide (SiO₂) is formed on a surface of the steel sheet during processing, thereby causing deterioration in plating properties due to inferior wettability at the relevant portion. Accordingly, the silicon content is preferably 1.0% to 2.0% based on the total weight of the steel sheet.

### Manganese (Mn): 2.5% to 3.5%

Manganese is an austenite-stabilizing element, and as manganese is added, an Ms temperature, which is a martensite transformation start temperature, gradually decreases, thereby increasing a retained austenite fraction during a continuous annealing heat treatment process. When the manganese content is less than 2.5%, the effect of adding manganese is insufficient. On the other hand, when the manganese content is greater than 3.5%, weldability is significantly lowered by increasing carbon equivalent, and an oxide (MnO) is formed on the surface of the steel sheet during processing, thereby causing deterioration in plating properties due to inferior wettability at the relevant portion. Accordingly, the manganese content is preferably 2.5% to 3.5% based on the total weight of the steel sheet.

### Phosphorus (P): more than 0% and not more than 0.02%

Phosphorus may perform a role similar to that of silicon in steel. However, when phosphorus is added in an amount greater than 0.02% based on the total weight of the steel sheet, weldability of the steel sheet may be lowered and brittleness may increase, thereby causing deterioration in material properties. Accordingly, the phosphorus content is preferably limited to more than 0% and not more than 0.02% based on the total weight of the steel sheet.

### Sulfur (S): more than 0% and not more than 0.01%

Sulfur is an element inevitably contained during manufacture of steel. Sulfur impairs toughness and weldability of steel and forms MnS by combining with manganese (Mn), thereby deteriorating corrosion resistance and impact properties of the steel. Accordingly, the sulfur content is preferably limited to more than 0% and not more than 0.01% based on the total weight of the steel sheet.

A remainder of the components of the steel sheet, which is a base material of the ultra-high-strength plated steel sheet, is iron (Fe). However, in a general steelmaking process, unintended impurities may inevitably be incorporated from raw materials or the surrounding environment, and thus cannot be excluded. Since these impurities may be understood by any person skilled in the art in a general manufacturing process, all details thereof are not specifically mentioned in this specification.

Meanwhile, in addition to the composition described above, the ultra-high-strength plated steel sheet according to an embodiment of the present invention may optionally further include any combination of the following components.

### Boron (B): more than 0% and not more than 0.001%

Boron may be selectively added to the steel sheet and may function as a grain boundary strengthening element. When the boron is added in an amount greater than 0.001%, nitrides such as BN may be formed, thereby lowering high-temperature ductility. Accordingly, the boron may be added in an amount of more than 0% and not more than 0.001% based on a total weight of the base material.

### Titanium (Ti): more than 0% and not more than 0.05%

Titanium is a main element precipitated in a form of carbides in steel. In the present invention, titanium is intended to secure retained austenite stability and improve strength through refinement of initial austenite grains due to precipitate formation, and to provide precipitation hardening due to ferrite grain refinement and presence of precipitates in ferrite. That is, titanium is an element that is precipitated in a form of TiC or TiN by combining with carbon (C) or nitrogen (N), or improves strength of a steel sheet through solid solution strengthening in iron (Fe). For example, titanium is effective in improving strength by forming carbonitrides or sulfides, and is an element capable of suppressing formation of boron nitride (BN) by being precipitated as titanium nitride (TiN) through combination with nitrogen. When titanium is added in an amount greater than 0.05% in the entire base material, manufacturing cost increases, excessive precipitates are formed in the ferrite phase so that precipitation strengthening acts excessively and elongation of the steel sheet may be lowered, and low-temperature toughness and weldability may be deteriorated due to a large amount of precipitates. Therefore, the content is limited to 0.05% or less.

### Chromium (Cr): more than 0% and not more than 1.0%

Chromium is an element having high hardenability and is added to increase strength through transformation strengthening. However, when chromium is present in an amount greater than 1.0 wt%, structures such as upper bainite are formed and non-uniformity is caused overall, thereby lowering toughness. Therefore, the chromium content is preferably controlled to 1.0 wt% or less.

### Molybdenum (Mo): more than 0% and not more than 1.0%

Molybdenum is an element having hardenability greater than that of chromium and is added to increase strength through transformation strengthening. When the molybdenum content is greater than 1.0 wt% within the carbon content range of the present invention, hard secondary phases such as martensite/austenite (MA) are formed in large amounts, thereby lowering toughness. Therefore, the molybdenum content is preferably controlled to 1.0 wt% or less.

### Nickel (Ni): more than 0% and not more than 1.0%

Nickel stabilizes austenite and may help increase hardenability of steel. When the nickel content is greater than 1.0%, it is undesirable because manufacturing cost of steel increases. Accordingly, nickel is preferably added in an amount of 1.0% or less based on the total weight of the base material.

In the manufacturing method according to the present invention, a semi-finished product subjected to hot rolling and cold rolling may exemplarily be a slab. A slab in a semi-finished state may be obtained through a continuous casting process after molten steel having a predetermined composition is obtained through a steelmaking process.

### Hot Rolling Step (S20)

A hot rolling process is applied to the steel material to perform a step (S20) of forming a hot-rolled steel sheet. Since the steel material is a high-alloy steel, it is necessary to reduce edge cracking and rolling load as much as possible in order to secure productivity, and thus a finish rolling temperature and a coiling temperature may be set in a high-temperature range.

The steel material is reheated at, for example, a slab reheating temperature (SRT) in a range of 1150°C to 1250°C. Through such reheating, re-solution of components segregated during casting and re-solution of precipitates may occur. When the reheating temperature is less than 1150°C, a problem that hot rolling load rapidly increases may occur. On the other hand, when the reheating temperature is greater than 1250°C, charging and discharging in a heating furnace may be difficult due to slab warpage, and it may be difficult to secure strength of a final produced steel sheet due to coarsening of initial austenite grains. The reheating temperature may vary depending on the steel material.

Subsequently, the reheated steel material is hot rolled, and hot rolling may be performed at, for example, a finish delivery temperature (FDT) of 850°C to 1000°C. When the finish rolling temperature is greater than 1000°C, quality of the steel sheet may be deteriorated due to occurrence of surface scale. When the finish rolling temperature is less than 850°C, an increase in rolling load and a decrease in productivity may be caused. The finish delivery temperature may vary depending on the steel material.

Subsequently, after the hot-rolled steel material is cooled at a cooling rate of 10 to 30°C/s, it is coiled at, for example, a coiling temperature (CT) in a range of 500°C to 700°C. The coiling temperature may vary depending on the steel material. When the coiling temperature is greater than 700°C, an undesired internal oxide layer may be generated in the hot-rolled steel sheet or the coiled hot-rolled coil. Since the coiled hot-rolled coil thus has variation in internal oxidation, it may be difficult to uniformly control a thickness of the internal oxide layer. When the coiling temperature is less than 500°C, an undesired low-temperature structure may be formed.

### Softening Heat Treatment Step (S25)

In the method for manufacturing an ultra-high-strength plated steel sheet having excellent weldability according to an embodiment of the present invention, a softening heat treatment step and a pickling step may be sequentially performed after the hot rolling process and before the cold rolling process. In the softening heat treatment step, the hot-rolled steel sheet is softened through softening heat treatment, thereby alleviating a problem of reduction load and a shape defect problem during subsequent cold rolling. That is, the softening heat treatment may secure cold rollability by softening the hot-rolled steel sheet through softening heat treatment for cold rolling work efficiency. When the hot-rolled steel sheet has a high strength, problems such as thickness hunting and shape defects may be caused during cold rolling. However, since the softening heat treatment process for the ultra-high-strength steel according to the present invention is applied to a hot-rolled coil in which scale remains, rather than a cold-rolled coil, a response to a change in surface characteristics due to a high-temperature reaction of scale during softening heat treatment is required.

In general, in the case of an ultra-high-strength steel material containing a large amount of Si, Mn, and the like, internal oxides are known to be formed along grain boundaries of the steel sheet together with scale at a high temperature. Since a main component of an oxide layer generated by internal oxidation is Fe, picklability is inferior. Therefore, with a pickling time equivalent to that of a general hot-rolled steel sheet, the internal oxide layer cannot be completely removed and a long pickling time is required, resulting in a problem of lowered productivity. Such internal oxidation occurs when activities of easily oxidizable elements such as Si and Mn are high and the elements exist under a specific oxygen partial pressure condition. Therefore, when a hot-rolled coil having scale remaining thereon is heat treated in a high-temperature reducing gas atmosphere, additional internal oxidation is generated due to oxygen generated during a scale reduction reaction.

Specifically, internal oxides, which were not observed in the hot-rolled material, were developed non-uniformly throughout the coil after the softening heat treatment, and behaviors of scale reduction and internal oxidation development may differ depending on a position in the coiled coil. In the case of an outer coil portion of the softening heat-treated coil, growth of internal oxidation by a scale hydrogen reduction reaction was mainly observed, whereas in the case of an inner coil portion, growth of internal oxidation by a scale eutectoid reaction (4FeO -> 4Fe + 2O2) was observed. This difference in growth behavior of internal oxidation is considered to be due to a difference in easiness of penetration of a reaction gas depending on a position of the coiled coil, and it was understood that oxygen generated in the scale hydrogen reduction reaction and the eutectoid reaction during the softening heat treatment diffuses into the base material and acts as a material for an internal oxidation reaction. Since it is preferable that the internal oxide layer be formed as uniformly as possible over the steel sheet, it is preferable to suppress the internal oxide layer at the coiling step as much as possible and to form the internal oxide layer in the softening heat treatment.

In consideration of the above, in the method for manufacturing an ultra-high-strength cold-rolled steel sheet according to the present invention, the coiling temperature is controlled to 500°C to 700°C and the softening heat treatment temperature is controlled to 500°C to 650°C.

The softening heat treatment may be performed in a batch annealing furnace (BAF) in a state in which the hot-rolled steel sheet is coiled, and may be performed in a hydrogen atmosphere. A hot-rolled steel sheet subjected to the softening heat treatment under the above process conditions may be softened to secure cold rollability. In addition, an internal oxide layer formed by the softening heat treatment has a thickness of a predetermined thickness or less (for example, 10 µm or less), and thus subsequent picklability may be simultaneously secured.

When the softening heat treatment is applied at a temperature of less than 500°C, martensite formed after hot rolling does not undergo recrystallization and only tempering proceeds, so that supersaturated carbon in the structure is formed and spheroidized as cementite (θ) in the structure. In this case, brittleness of martensite may be manifested and thus safety accidents such as strip breakage may occur during cold rolling. That is, when the softening heat treatment is performed, austenite is excessively formed and martensite is formed during cooling, so that a strength reduction may not be effectively manifested.

Further, when the softening heat treatment is applied at a temperature of greater than 650°C, the internal oxide layer formed by the softening heat treatment exceeds a predetermined thickness (for example, greater than 10 µm), so that it is difficult to secure subsequent picklability. In addition, when the softening heat treatment is applied at a temperature of greater than 650°C, austenite is excessively formed and martensite is formed during cooling, so that a strength reduction is not effectively manifested.

Meanwhile, in the method for manufacturing an ultra-high-strength plated steel sheet having excellent weldability according to an embodiment of the present invention, whether the softening heat treatment step is applied may be selected according to a steel grade or a target strength. For example, when a target tensile strength after cold rolling/annealing is 1180 MPa or more, the softening heat treatment step may be performed, and when the target tensile strength after cold rolling/annealing is 980 MPa or less, the softening heat treatment step may not be performed. A time for performing the softening heat treatment may be 1 to 12 hours.

In the pickling treatment step, after the softening heat treatment is performed, a pickling treatment for washing the hot-rolled steel sheet with an acid may be performed. By pickling the hot-rolled steel sheet, at least a part of the internal oxide layer may be removed. The pickling treatment may be performed, for example, at a temperature of 70°C to 90°C, with a hydrochloric acid concentration of 5% to 15%, for 20 to 40 seconds. Further, an inhibitor concentration may be 0.1% to 0.5%.

### Cold Rolling Step (S30)

A cold rolling process is applied to the hot-rolled steel sheet to perform a step (S30) of forming a cold-rolled steel sheet. Cold rolling is performed to match a thickness of a final produced steel sheet by using a hot-rolled material.

In the cold rolling step (S30), the pickled hot-rolled steel sheet may be cold rolled at an average reduction ratio of, for example, 40% to 60%, and accordingly a cold-rolled steel sheet may be manufactured. A microstructure of the cold-rolled steel sheet has an elongated shape of a structure of the hot-rolled steel sheet, and a microstructure of a finally produced steel sheet is determined in a subsequent heat treatment.

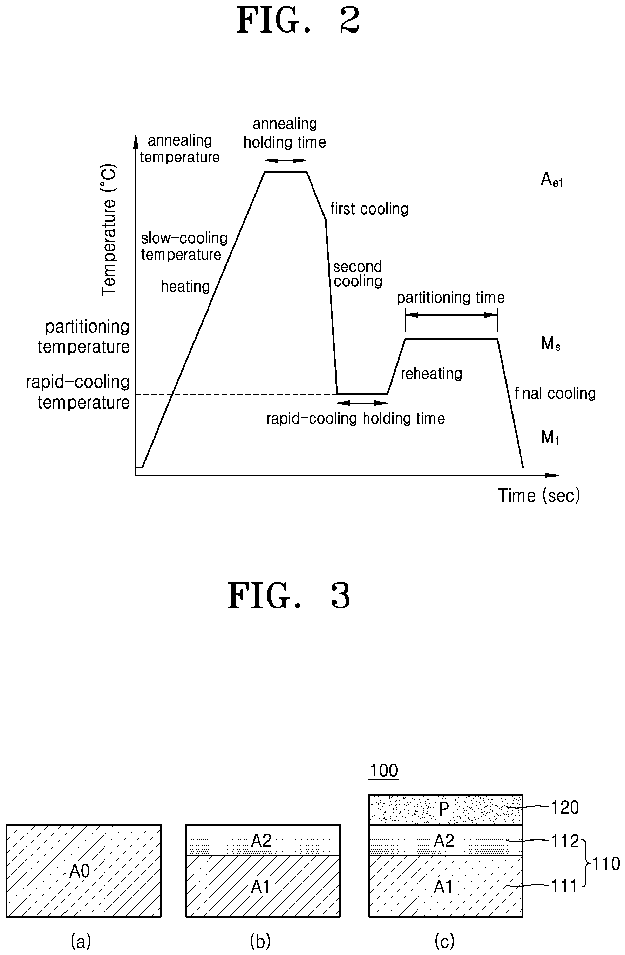

FIG. 2 is a graph illustrating subsequent heat treatment steps (annealing, cooling, and reheating) applied to a cold-rolled steel sheet in a method for manufacturing an ultra-high-strength plated steel sheet having excellent weldability according to an embodiment of the present invention, and FIG. 3 is a view schematically illustrating a process in which an ultra-high-strength plated steel sheet is formed in the method. A configuration illustrated in FIG. 3 (a) corresponds to S30 among the steps illustrated in FIG. 1, a configuration illustrated in FIG. 3 (b) corresponds to S40 to S70 among the steps illustrated in FIG. 1, and a configuration illustrated in FIG. 3 (c) corresponds to S80 among the steps illustrated in FIG. 1.

### Annealing Step (S40)

Referring to FIGS. 2 and 3, the cold-rolled steel sheet is annealed in a continuous annealing furnace having a slow cooling section.

In the annealing step (S40), a dew point temperature of an atmosphere gas in the annealing furnace is controlled to be -20°C to +20°C. The atmosphere gas in the annealing furnace may be, for example, a mixed gas of nitrogen: 90% and oxygen: 10%. By using a humidifier attached to an outer wall of the annealing furnace to inject pure H₂O into the annealing furnace, a dew point of the heat treatment atmosphere gas may be managed to be -20°C to +20°C. Through the annealing heat treatment having the partial pressure of H₂O in the annealing furnace described above, the cold-rolled steel sheet constituting the ultra-high-strength plated steel sheet of the present invention undergoes a decarburization reaction at the surface of the cold-rolled steel sheet, and is ultimately formed into a steel sheet including an inner layer portion and a surface layer portion on the inner layer portion. A0 illustrated in FIG. 3 (a) corresponds to the cold-rolled steel sheet, A1 illustrated in FIG. 3 (b) corresponds to the inner layer portion constituting the steel sheet, and A2 corresponds to the surface layer portion constituting the steel sheet. An alloy composition of the cold-rolled steel sheet (A0) is the same as an alloy composition of the inner layer portion (A1) constituting the steel sheet, but is different from an alloy composition of the surface layer portion (A2) constituting the steel sheet in carbon content. That is, when the dew point of the atmosphere gas in the annealing furnace is managed to be -20°C to +20°C, the inner layer portion (A1) and the surface layer portion (A2), which have different compositions within the component ranges limited in this patent, may be implemented.

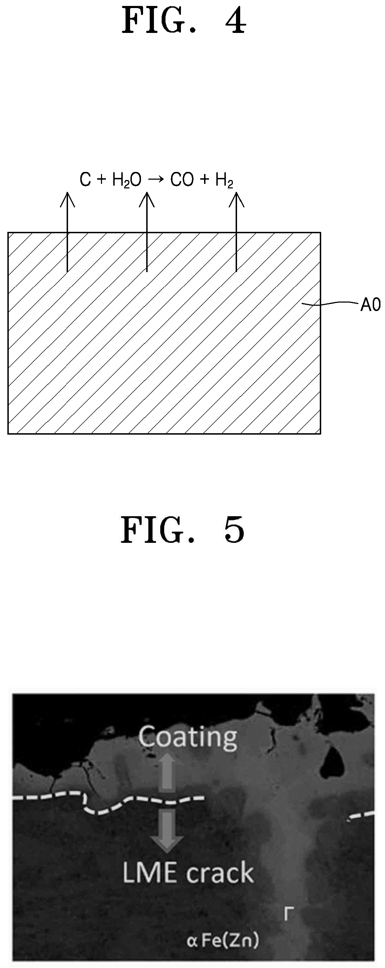

FIG. 4 is a view schematically illustrating an outline of a decarburization reaction in the method for manufacturing an ultra-high-strength plated steel sheet according to an embodiment of the present invention.

Even when the annealing temperature of the annealing step is set in a region in which an austenite phase is formed as described above, when the dew point temperature of the atmosphere in the annealing furnace is -20°C or more, carbon, which is an austenite-stabilizing element, is oxidized at the surface of the cold-rolled steel sheet (A0) and volatilized in a form of carbon monoxide, and thus the decarburization reaction may proceed by a continuous reaction. The reaction may be represented by the following Chemical Formula 1.

Chemical Formula 1 C(s) + H₂O(g) -> CO(g) + H₂(g)

As the decarburization reaction continues, carbon is depleted in the surface layer, and when austenite in the surface layer has already transformed into ferrite even in the annealing step, austenite is not formed in the surface layer in a subsequent cooling/reheating process, and a mostly ferrite single-phase structure may be secured in a final stage at room temperature. Due to the ferrite single-phase structure formed in the surface layer, austenite sensitive to liquid metal embrittlement (LME) cracks may be avoided, thereby making it possible to widen a weldable current range and improve welding strength.

Meanwhile, in order to prevent liquid metal embrittlement (LME) cracks in the surface layer portion (A2), a thickness of the surface layer portion (A2) constituting the steel sheet needs to be at least 10 µm or more. When the thickness of the surface layer portion (A2) is less than 10 µm, it is difficult to prevent liquid metal embrittlement (LME) cracks in the surface layer portion (A2).

When the dew point temperature is less than -20°C, an alloy composition of the inner layer portion (A1) constituting the steel sheet is not significantly different from that of the surface layer portion (A2), or the surface layer portion (A2) is formed to have a thickness of less than 10 µm, and thus LME cracks cannot be suppressed.

When the dew point temperature is +20°C or more, the thickness of the surface layer portion (A2) constituting the steel sheet becomes excessively large (for example, greater than 50 µm), and thus stable material properties of the ultra-high-strength plated steel sheet cannot be secured.

Specifically, the inner layer portion (A1) may comprise, in wt%, C: 0.1% to 0.3%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities. The surface layer portion (A2) may have a thickness of 10 µm to 50 µm from the surface of the steel sheet, may have a carbon content lower than the carbon content of the inner layer portion, and may comprise, in wt%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities. For example, the surface layer portion (A2) may have a carbon content of 10% or less of the carbon content of the inner layer portion (A1).

In general, the Ac3 temperature of steel is approximated by Equation 1 below. In Equation 1, [C], [Mn], [Si], and [Cr] respectively correspond to wt% values of carbon, manganese, silicon, and chromium, which are alloy components of steel.$Ac 3 \left(°C\right) ≒ 950 - 370 \left[C\right] - 27.4 \left[Mn\right] + 27.3 \left[Si\right] - 6.35 \left[Cr\right]$ Equation 1

As described above, since the carbon contents of the inner layer portion (A1) and the surface layer portion (A2) constituting the steel sheet are different from each other, the Ac3 temperature of the inner layer portion (A1) and the Ac3 temperature of the surface layer portion (A2) are different from each other. Therefore, even under a certain annealing temperature, phase transformation behaviors of the inner layer portion (A1) and the surface layer portion (A2) may proceed differently, and fractions of martensite in final microstructures of the inner layer portion (A1) and the surface layer portion (A2) may be manifested differently. The difference in martensite fraction has technical significance in that the possibility of occurrence of liquid metal embrittlement (LME), in which the plating layer melts and penetrates into the surface of the steel sheet during welding of the plated steel sheet to induce brittleness, may be minimized or suppressed while simultaneously providing an ultra-high-strength plated steel sheet.

In the annealing step (S40), a lower limit of the annealing temperature range may be controlled to be a temperature 30°C lower than the Ac3 temperature of the inner layer portion (A1), and an upper limit of the annealing temperature range may be controlled to be the Ac3 temperature of the surface layer portion (A2). When a maximum temperature of the annealing furnace is lower than a temperature 30°C lower than the Ac3 temperature of the inner layer portion (A1) (= Ac3 - 30°C), it is difficult to configure the final microstructure of the inner layer portion (A1) to have an area fraction of tempered martensite of 50% or more, and thus it is difficult to secure strength of a 1.2 GPa class or higher. On the other hand, when the maximum temperature of the annealing furnace exceeds the Ac3 temperature of the surface layer portion (A2), the area fraction of tempered martensite in the final microstructure of the surface layer portion (A2) exceeds 10%, and thus LME properties become vulnerable.

The annealing heat treatment satisfying the annealing temperature described above may be performed, for example, at a temperature corresponding to a two-phase region of austenite and ferrite. By performing the heat treatment in the two-phase region, an appropriate fraction of ferrite may be secured, and ideal ferrite, tempered martensite, and retained austenite in the final microstructure may be implemented, thereby obtaining target material properties of the steel sheet.

After the annealing step, the steel sheet is divided into an inner layer portion (A1) and a surface layer portion (A2) contacting the inner layer portion (A1) and having different carbon contents from each other. The microstructure of the inner layer portion (A1) may include, in area fraction, austenite: 75% to 95% and ferrite: 5% to 25%, and the microstructure of the surface layer portion (A2) may include, in area fraction, austenite: more than 0% and not more than 10%, and ferrite: 90% or more and less than 100%.

An annealing temperature and an annealing time affect austenite grain size and thus may have a great effect on strength of the steel sheet. In order to perform the annealing heat treatment, the steel sheet is heated at, for example, a heating rate of 1°C/s or more, and for example a heating rate in a range of 1°C/s to 10°C/s. When the heating rate is less than 1°C/s, it takes a long time to reach a target annealing temperature, so that production efficiency is lowered and grain size may become coarse.

Meanwhile, as an annealing time, which is a time for performing the annealing heat treatment, increases, it affects coarsening due to austenite grain growth similarly to the annealing heat treatment temperature. By controlling the annealing time (A) for performing the annealing heat treatment and the moisture concentration (B) in the annealing furnace, a possibility of occurrence of liquid metal embrittlement (LME), in which the plating layer melts and penetrates into the surface of the steel sheet during welding of the plated steel sheet to induce brittleness, may be suppressed, and the thickness of the decarburized layer formed on the surface layer of the steel sheet may be controlled. Specifically, the annealing time (A) and the moisture concentration (B) in the annealing furnace may be controlled on the basis of a product of a square root of the annealing time, A^{1/2}, and a natural logarithm value of a reciprocal of the moisture concentration, ln(1/B). For example, the annealing step (S40) may be performed under conditions in which the annealing time (A) and the moisture concentration (B) in the annealing furnace satisfy Equation 2 below.${\left(A\right)}^{1 / 2} \times ln \left(1/B\right) \leq K \left(where K is a predetermined constant\right)$ Equation 2

As one example of the method for manufacturing the ultra-high-strength plated steel sheet having excellent weldability, the annealing heat treatment may be controlled such that, as the annealing time (A) becomes shorter, the moisture concentration (B) in the annealing furnace becomes higher. As another example, the annealing heat treatment may be controlled such that, as the moisture concentration (B) in the annealing furnace becomes lower, the annealing time (A) becomes longer. According to this configuration, a possibility of occurrence of liquid metal embrittlement (LME), in which the plating layer melts and penetrates into the surface of the steel sheet during welding of the plated steel sheet to induce brittleness, may be suppressed, and the thickness of the surface layer portion (A2) formed in the surface layer of the steel sheet may be 10 µm or more. The above is not limited to a superficial recognition that LME is mitigated when hardness of the surface layer is lowered due to surface decarburization. Rather, based on recognition of a problem that optimization of the decarburized layer is difficult using only the dew point in the annealing furnace, the present invention may provide a technical idea from an integrated consideration of annealing time and dew point according to annealing temperature in order to secure an optimal decarburization condition.

### First and Second Cooling Steps (S50, S60)

The annealed cold-rolled steel sheet is subjected to multi-stage cooling. Specifically, a first cooling step (S50) and a second cooling step (S60) may be performed on the annealed steel sheet.

A first cooling step (S50) of cooling the steel sheet at an average cooling rate of 1 to 10°C/s to a first cooling end temperature of 600°C or more and less than 800°C is a slow cooling step, and may secure plasticity of a final microstructure by attempting to secure a predetermined amount of ferrite in the final microstructure during the heat treatment process. If the slow cooling step is not performed after the annealing step and rapid quenching is performed at a cooling rate of 30°C/s, a high-temperature-expanded strip rapidly shrinks, making it difficult to control a shape of the product. Therefore, the first cooling step (S50) is introduced so that a shape of the strip in the relevant section is first corrected and a subsequent rapid cooling process is performed. When the cooling end temperature of the slow cooling is less than 600°C, ferrite transformation may occur in an undesired amount and strength may be lowered accordingly. After the slow cooling step (S50), the microstructure of the inner layer portion (A1) may include, in area fraction, austenite: 75% to 95% and ferrite: 5% to 25%, and the microstructure of the surface layer portion (A2) may include, in area fraction, austenite: more than 0% and not more than 10%, and ferrite: 90% or more and less than 100%.

Subsequently, a second cooling step (S60) of cooling the steel sheet at an average cooling rate of 30°C/s or more, for example 30 to 100°C/s, to a second cooling end temperature of 150°C or more and less than 300°C is a rapid cooling step. Through control of the rapid cooling end temperature, austenite in the microstructure after slow cooling may be transformed into martensite, thereby facilitating securing final material properties, and an average cooling rate of 30°C/s or more is required to suppress phase transformation that may occur during the rapid cooling process. After the rapid cooling step (S60), the microstructure of the inner layer portion (A1) may include, in area fraction, martensite: 50% to 75%, ferrite: 5% to 25%, and retained austenite: 10% to 30%, and the microstructure of the surface layer portion (A2) may include, in area fraction, martensite: more than 0% and not more than 10%, and ferrite: 90% or more and less than 100%.

Subsequently, the cold-rolled steel sheet subjected to the second cooling may be maintained at the second cooling end temperature of 150°C or more and less than 300°C for a time in a range of, for example, 1 second to 100 seconds. During the holding time after rapid cooling, initially the temperature of the steel may be homogenized. The second cooling end temperature may be a temperature between a martensite transformation start temperature (Ms) and a martensite transformation finish temperature (Mf).

### Reheating Step (S70)

The multi-stage cooled cold-rolled steel sheet may be reheated at, for example, a heating rate in a range of 1°C/s to 10°C/s, and may be maintained at, for example, a temperature of more than 350°C and less than 500°C for a time of 60 seconds or less, thereby performing partitioning heat treatment. The partitioning heat treatment temperature may be higher than the martensite transformation start temperature (Ms). The reheating process is intended to secure strength and elongation through carbon concentration in retained austenite and tempering of martensite during the process, and finally to maintain a final microstructure configuration.

When the partitioning heat treatment temperature is 350°C or less, the partitioning effect may be insufficient. When the partitioning heat treatment temperature is 500°C or more, carbides become coarse and strength may be lowered. An influence of the holding time of the partitioning heat treatment may be less significant than that of the partitioning temperature. When the partitioning heat treatment holding time exceeds 60 seconds, heat treatment efficiency is lowered and carbide size increases, so that strength may be lowered. The partitioning heat treatment step may be performed immediately after the multi-stage cooling is performed, or may be performed after maintaining at room temperature for several minutes or more.

In the case of an uncoated material, after the partitioning heat treatment step is terminated, the material is cooled to room temperature, for example to a temperature in a range of 0°C to 40°C. In this step, when cooling is performed as rapid cooling, some of the microstructure may be phase-transformed into martensite.

The multi-stage cooling steps (S50, S60) and the reheating step (S70) described above correspond to Q&P (Quenching and Partitioning) heat treatment steps developed to simultaneously secure high strength and high ductility of a steel material. The Q&P heat treatment suppresses formation of carbide precipitates of carbon discharged from a martensitic structure during quenching, and allows carbon to diffuse into a retained austenite structure through partitioning. Through re-diffusion of carbon, the retained austenite structure is stabilized even at room temperature, and ultimately both high ductility by the retained austenite structure and high strength by the martensitic structure may be secured.

After the reheating step (S70), the final microstructure of the inner layer portion (A1) may include, in area fraction, tempered martensite: 50% to 75%, ferrite: 5% to 25%, and retained austenite: 10% to 30%, and the final microstructure of the surface layer portion (A2) may include, in area fraction, tempered martensite: more than 0% and not more than 10%, and ferrite: 90% or more and less than 100%. Even if retained austenite exists in the final microstructure of the surface layer portion (A2) after the reheating step (S70), a ratio thereof is managed to be 1% or less in area fraction.

### Zinc Plating Treatment Step (S80)

A step (GI) of forming a hot-dip plated steel sheet by immersion-plating the annealed cold-rolled steel sheet in a molten plating bath may be performed, and a step (GA) of forming a galvannealed steel sheet by alloying heat-treating the cold-rolled steel sheet or hot-dip plated steel sheet on which the hot-dip plating layer is formed may be further performed. In the case of a plated material, after the partitioning heat treatment step is performed, the material may directly enter the plating bath without being cooled to room temperature.

Meanwhile, the plating bath may be a molten zinc plating bath, and in this case the hot-dip plated steel sheet may be a hot-dip galvanized steel sheet. Specifically, an entry temperature of the plating bath may be, for example, 460°C, and a composition of the plating bath may be a zinc plating bath containing 0.11 wt% to 0.22 wt% aluminum and saturated Fe. Alternatively, the plating bath may be a Zn-Mg-Al plating bath. Meanwhile, an alloying heat treatment temperature may be 450°C to 600°C. A coating weight may be 40 to 200 g/m2 on both sides, and a plating layer thickness may be 10 to 30 µm.

Meanwhile, in a modified embodiment of the present invention, unlike the GI process or the GA process, an electrogalvanized steel sheet process may also be applied.

The ultra-high-strength plated steel sheet having excellent weldability according to an embodiment of the present invention, implemented by performing the above-described steps, is, with reference to FIG. 3 (c), a plated steel sheet (100) including: a steel sheet (110) including an inner layer portion (A1) and a surface layer portion (A2) on the inner layer portion (A1); and a plating layer (120) on the steel sheet (100), wherein the inner layer portion (A1) comprises, in wt%, C: 0.1% to 0.3%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities, wherein a final microstructure of the inner layer portion (A1) has an area fraction of tempered martensite of 50% or more, wherein the surface layer portion (A2) has a carbon content lower than that of the inner layer portion, comprises, in wt%, Si: 1.0% to 2.0%, Mn: 2.5% to 3.5%, P: more than 0% and not more than 0.02%, and S: more than 0% and not more than 0.01%, with a balance of iron (Fe) and other unavoidable impurities, wherein a final microstructure of the surface layer portion (A2) has an area fraction of tempered martensite of 10% or less, and wherein the plated steel sheet (100) has a yield strength of 850 MPa or more and 1070 MPa or less, a tensile strength of 1180 MPa or more and less than 1470 MPa, and an elongation of 14% or more.

In the ultra-high-strength plated steel sheet (100), the surface layer portion (A2) may have a carbon content of 10% or less of the carbon content of the inner layer portion (A1), and the surface layer portion (A2) may have a thickness of 10 µm to 50 µm from the surface of the steel sheet (110). The surface of the steel sheet (110) constitutes a boundary between the steel sheet (110) and the plating layer (120).

In the ultra-high-strength plated steel sheet (100), the final microstructure of the inner layer portion (A1) may include, in area fraction, tempered martensite: 50% to 75%, ferrite: 5% to 25%, and retained austenite: 10% to 30%, and the final microstructure of the surface layer portion (A2) may include, in area fraction, tempered martensite: more than 0% and not more than 10%, and ferrite: 90% or more and less than 100%. Even if retained austenite exists in the final microstructure of the surface layer portion (A2), a ratio of the retained austenite is managed to be 1% or less in area fraction. Therefore, the final microstructure of the surface layer portion (A2) may include retained austenite in an area fraction of 0% to 1%.

When spot welding is performed on the plated steel sheet (100) under conditions of a welding electrode tip diameter of 6 mm, an electrode force of 3.5 kN, and a welding current of 6.0 kA to 7.5 kA, a maximum length of a liquid metal embrittlement (LME) crack in the steel sheet (110) may be 50 µm or less. Specifically, the plated steel sheet (100) has an applicable welding current range of 6.0 kA to 7.5 kA, and is characterized in that, during welding of the plated steel sheet (100), the possibility of occurrence of liquid metal embrittlement (LME), in which the plating layer (120) melts and penetrates into the surface of the steel sheet (110) to induce brittleness, is 0%.

FIG. 5 is a photograph showing a state in which a liquid metal embrittlement crack is generated in a plated steel sheet as a comparative example of the present invention.

When a spot welding process is performed on a general plated steel sheet in an automobile assembly line, the plating layer melts and molten metallic zinc may penetrate toward interfaces of retained austenite present in a surface layer of the steel sheet of the plated steel sheet, thereby inducing a liquid metal embrittlement (LME) phenomenon. Due to the LME phenomenon, an LME crack is generated and welding strength rapidly decreases, and thus a weldable current range becomes narrow. That is, during resistance spot welding of an ultra-high-strength plated steel sheet, in the case of a galvanized steel sheet (GI), a melting point of the plating layer is very low, namely 420°C, and even in the case of a galvannealed steel sheet, molten metallic zinc is formed due to a peritectic reaction in the vicinity of 780°C. The formed molten metallic zinc penetrates along grain boundaries of the base material in a region in which a load is generated by welding electrodes at a high temperature, and thus strength of the base material is rapidly degraded by heat.

Referring to FIG. 5, it may be confirmed that austenite is phase-transformed into alphaFe(Zn) at a high temperature due to zinc diffused toward the base material side around an LME crack. Since alphaFe(Zn) is a material having very high brittleness, brittleness of the steel sheet is further accelerated by this phase transformation. Therefore, an occurrence frequency of liquid metal embrittlement (LME) is more sensitive as retained austenite increases, and it was confirmed that avoiding austenite present in the surface layer is a measure capable of improving weldability.

According to the method for manufacturing an ultra-high-strength plated steel sheet having excellent weldability according to the technical idea of the present invention, in the step (S40) of annealing the cold-rolled steel sheet in the annealing furnace, a dew point temperature in the annealing furnace is controlled in a predetermined high-dew-point range relative to the related art, thereby inducing a decarburization reaction in the surface layer portion including the surface of the steel sheet within a predetermined range so that the surface layer portion and the inner layer portion have different carbon contents. Accordingly, Ac3 temperatures of the surface layer portion and the inner layer portion become different from each other, and thus phase transformation behaviors (for example, a fraction of austenite) of the surface layer portion and the inner layer portion proceed differently even within a predetermined annealing temperature range. As a result, fractions of martensite in final microstructures of the surface layer portion and the inner layer portion are manifested differently, so that the possibility of occurrence of liquid metal embrittlement (LME), in which the plating layer melts and penetrates into the surface of the steel sheet during welding of the plated steel sheet to induce brittleness, may be minimized or suppressed while simultaneously providing an ultra-high-strength plated steel sheet.

According to the above, when a plated steel sheet of a tensile strength class of 1.2 GPa or more is to be manufactured, it is preferable to configure a silicon content to be 0.5 wt% or less or to control a martensite fraction to be 10% or less. However, when the silicon content is controlled to be 0.5 wt% or less, strength and elongation of the steel sheet may be secured by adjusting contents of other components, but there is a problem that economic efficiency deteriorates because many other elements are added, thereby increasing production cost. However, because LME cracks generated during spot welding occur at the plating and the surface portion of the steel sheet, it can be understood that, if the martensite of the base material is secured at a sufficient fraction to secure product strength and only the martensite fraction at the surface is controlled to be 10% or less, both material properties and LME resistance may be secured even when the silicon content is high.

### EXPERIMENTAL EXAMPLES

Experimental examples will now be provided to facilitate understanding of the present invention. However, the following experimental examples are only for facilitating understanding of the present invention, and the present invention is not limited by the following experimental examples.

### First Experimental Example

Table 1 shows a composition (unit: wt%) of a steel sheet constituting an ultra-high-strength plated steel sheet according to the first experimental example of the present invention, and Table 2 shows process conditions(excluding the annealing process) of the ultra-high-strength plated steel sheet according to the first experimental example of the present invention. The composition of Table 1 is a composition of a cold-rolled steel sheet and further means a composition of the inner layer portion constituting the steel sheet.

**Table 1**

| Component | C | Mn | Si | P | S | Fe |
|---|---|---|---|---|---|---|
| Content | 0.18 | 1.8 | 2.8 | 0.015 | 0.003 | Bal. |

**Table 2**

| | |
|---|---|
| Hot-rolling process | Reheating temperature: 1200°C, Finish rolling temperature: 900°C, Coiling temperature: 600°C |
| Heat-treatment process | Slow-cooling temperature: 700°C, Rapid-cooling temperature: 250°C, Reheating temperature: 460°C, Plating bath temperature: 460°C |

A steel having the composition (unit: wt%) of Table 1 was prepared, and a hot-rolled steel sheet produced through a predetermined hot rolling process was prepared. The remainder was iron (Fe) and other unavoidable impurities. Both the examples and the comparative examples had the same alloy composition. Referring to Table 2, the hot rolling process was conducted under process conditions of reheating temperature: 1200°C, finish rolling temperature: 900°C, and coiling temperature: 600°C. After the annealing process, process conditions of slow cooling temperature: 700°C, rapid cooling temperature: 250°C, and reheating temperature: 460°C were applied. Table 3 shows annealing process conditions and thicknesses and compositions of the surface layer portion in the method for manufacturing the ultra-high-strength plated steel sheet according to the first experimental example of the present invention. In Table 3, units of components are wt%, and a unit of temperature is °C.

**Table 3**

| | dew point | surface layer portion thickness (µm) | surface layer portion composition | | | Ac3 (surface layer portion) | Ac3 (inner layer portion) | maximum annealing temp. |
|---|---|---|---|---|---|---|---|---|
| | | | C | Mn | Si | | | |
| Comparative Example 1 | -25°C | <10 | 0.18 | 2.8 | 1.8 | 855.8 | 855.8 | 800 |
| Comparative Example 2 | -25°C | <10 | 0.18 | 2.8 | 1.8 | 855.8 | 855.8 | 830 |
| Comparative Example 3 | -25°C | <10 | 0.18 | 2.8 | 1.8 | 855.8 | 855.8 | 860 |
| Comparative Example 4 | -25°C | <10 | 0.18 | 2.8 | 1.8 | 855.8 | 855.8 | 930 |
| Comparative Example 5 | +5°C | 30 | 0.01 | 2.8 | 1.8 | 918.7 | 855.8 | 800 |
| Example 1 | +5°C | 30 | 0.01 | 2.8 | 1.8 | 918.7 | 855.8 | 830 |
| Example 2 | +5°C | 30 | 0.01 | 2.8 | 1.8 | 918.7 | 855.8 | 860 |
| Comparative Example 6 | +5°C | 30 | 0.01 | 2.8 | 1.8 | 918.7 | 855.8 | 930 |
| Comparative Example 7 | +21°C | 100 | 0.001 | 2.8 | 1.8 | 922.05 | 855.8 | 800 |
| Comparative Example 8 | +21°C | 100 | 0.001 | 2.8 | 1.8 | 922.05 | 855.8 | 830 |
| Comparative Example 9 | +21°C | 100 | 0.001 | 2.8 | 1.8 | 922.05 | 855.8 | 860 |
| Comparative Example 10 | +21°C | 100 | 0.001 | 2.8 | 1.8 | 922.05 | 855.8 | 930 |

Table 4 shows final microstructure fractions and material properties of the ultra-high-strength plated steel sheet according to the first experimental example. In Table 4, a unit of the microstructure fraction is area fraction (%), TM means tempered martensite, F means ferrite, and Ra means retained austenite.

**Table 4**

| | Microstructure fractions in the surface layer portion | | | Microstructure fractions in the inner layer portion | | | yield strength (MPa) | tensile strength (MPa) | elongation (%) | maximum LME crack length (µm) |
|---|---|---|---|---|---|---|---|---|---|---|
| | TM | F | Ra | TM | F | Ra | | | | |
| Comparative Example 1 | 49.7 | 32.0 | 18.3 | 49.7 | 32.0 | 18.3 | 850 | 1160 | 20 | 200 |
| Comparative Example 2 | 63.9 | 15.4 | 20.7 | 63.9 | 15.4 | 20.7 | 980 | 1320 | 14 | 230 |
| Comparative Example 3 | 71.0 | 14.0 | 15.0 | 71.0 | 14.0 | 15.0 | 1100 | 1400 | 14 | 240 |
| Comparative Example 4 | 70.3 | 14.1 | 15.6 | 70.3 | 14.1 | 15.6 | 1089 | 1386 | 7.9 | 240 |
| Comparative Example 5 | 7.3 | 91.7 | 1.0 | 49.7 | 32.0 | 18.3 | 799 | 1090.4 | 18.8 | ≤30 |
| Example 1 | 7.5 | 92.0 | 0.5 | 63.9 | 15.4 | 20.7 | 921 | 1250 | 16 | ≤30 |
| Example 2 | 6.0 | 93.5 | 0.5 | 71.0 | 14.0 | 15.0 | 1034 | 1316 | 15 | ≤30 |
| Comparative Example 6 | 87.7 | 1.2 | 11.1 | 70.3 | 14.1 | 15.6 | 1078 | 1372 | 7.8 | 150 |
| Comparative Example 7 | 3.2 | 96.3 | 0.5 | 49.7 | 32.0 | 18.3 | 639.2 | 872.32 | 15 | ≤30 |
| Comparative Example 8 | 2.9 | 96.6 | 0.5 | 63.9 | 15.4 | 20.7 | 736.8 | 1000 | 11.2 | ≤30 |
| Comparative Example 9 | 1.3 | 98.2 | 0.5 | 71.0 | 14.0 | 15.0 | 827.2 | 1052.8 | 6.4 | ≤30 |
| Comparative Example 10 | 87.7 | 3.5 | 8.8 | 70.3 | 14.1 | 15.6 | 1067 | 1358 | 7.7 | 100 |

Referring to Tables 3 and 4, Example 1 and Example 2 satisfy the condition that, in the annealing step, the dew point temperature in the annealing furnace is controlled to be -20°C to +20°C and the annealing temperature satisfies a range from a temperature 30°C lower than the Ac3 temperature of the inner layer portion, which is a lower limit of the annealing temperature range, to the Ac3 temperature of the surface layer portion, which is an upper limit of the annealing temperature range. Accordingly, the thickness of the surface layer portion satisfies a range of 10 µm to 50 µm, and the carbon content of the surface layer portion is lower than the carbon content of the inner layer portion (see Table 1). Specifically, the surface layer portion has a carbon content of 10% or less of the carbon content of the inner layer portion, the material properties of the plated steel sheet satisfy a yield strength of 850 MPa or more and 1070 MPa or less, a tensile strength of 1180 MPa or more and less than 1470 MPa, and an elongation of 14% or more, the final microstructure of the inner layer portion includes, in area fraction, tempered martensite: 50% to 75%, ferrite: 5% to 25%, and retained austenite: 10% to 30%, and the final microstructure of the surface layer portion includes, in area fraction, tempered martensite: more than 0% and not more than 10%, and ferrite: 90% or more and less than 100%. It may also be confirmed that, although retained austenite is present in a negligible amount in the microstructure of the surface layer portion, the ratio thereof is less than 1% in area fraction. In contrast, referring to Comparative Examples 1 to 4, it may be confirmed that, in the annealing step, when the dew point temperature in the annealing furnace is less than -20°C, the thickness of the surface layer portion does not satisfy and falls below the range of 10 µm to 50 µm, and the compositions of the surface layer portion and the inner layer portion are not different from each other; specifically, it may be confirmed that the carbon content of the surface layer portion is not different from the carbon content of the inner layer portion, and accordingly, liquid metal embrittlement (LME) cracks cannot be suppressed.

Furthermore, in Comparative Example 1, since the maximum annealing temperature does not exceed a temperature 30°C lower than the Ac3 temperature of the inner layer portion, the area fraction of tempered martensite in the inner layer portion does not exceed 50%, and thus it is difficult to secure a tensile strength of 1.2 GPa class or higher.

Further, in Comparative Examples 3 and 4, a maximum annealing temperature exceeds the Ac3 temperature of the surface layer portion, and thus it may be confirmed that the area fraction of tempered martensite in the final microstructure of the surface layer portion exceeds 10%, a yield strength exceeds a design range, and the material is vulnerable to liquid metal embrittlement (LME).

Referring to Comparative Example 5, even when the dew point temperature in the annealing furnace is controlled to be -20°C to +20°C, when the annealing temperature is less than a temperature 30°C lower than the Ac3 temperature of the inner layer portion, which is a lower limit of the annealing temperature range, a tensile strength does not satisfy and falls below a range of 1180 MPa or more and less than 1470 MPa, so that it is difficult to secure a strength of a 1.2 GPa class or higher.

Referring to Comparative Example 6, even when the dew point temperature in the annealing furnace is controlled to be -20°C to +20°C, when the annealing temperature exceeds the Ac3 temperature of the surface layer portion, which is an upper limit of the annealing temperature range, it may be confirmed that the area fraction of tempered martensite in the final microstructure of the surface layer portion exceeds 10% and the material is vulnerable to liquid metal embrittlement (LME).

Referring to Comparative Examples 7 to 10, when the dew point temperature in the annealing furnace exceeds 20°C in the annealing step, it may be confirmed that the thickness of the surface layer portion exceeds and thus does not satisfy a range of 10 µm to 50 µm, so that stable material properties are not secured. Specifically, a tensile strength falls below a range of 1180 MPa or more and less than 1470 MPa or elongation falls below a range of 14% or more.

Further, in Comparative Example 10, since a maximum annealing temperature exceeds the Ac3 temperature of the surface layer portion, it may be confirmed that the area fraction of tempered martensite in the final microstructure of the surface layer portion exceeds 10% and the material is vulnerable to liquid metal embrittlement (LME).

Next, after implementing the plated steel sheet by applying the composition of Table 1 and the process conditions of Table 2 described above, a spot welding process was applied. Welding was performed under a condition 0.5 kA lower than a condition under which spatter (expulsion) occurred, and an LME evaluation was conducted. Spot welding generally performed for automotive sheet materials starts from securing a sufficient nugget over as wide a current range as possible. When the current is low, a sufficient nugget size is not formed and soundness (strength, toughness, etc.) of a welded portion is not secured. When the current is high, a spatter (expulsion) phenomenon occurs. Here, spatter refers to a phenomenon in which molten metal, which is a base material melted by resistance heat during spot welding, escapes outside the nugget.

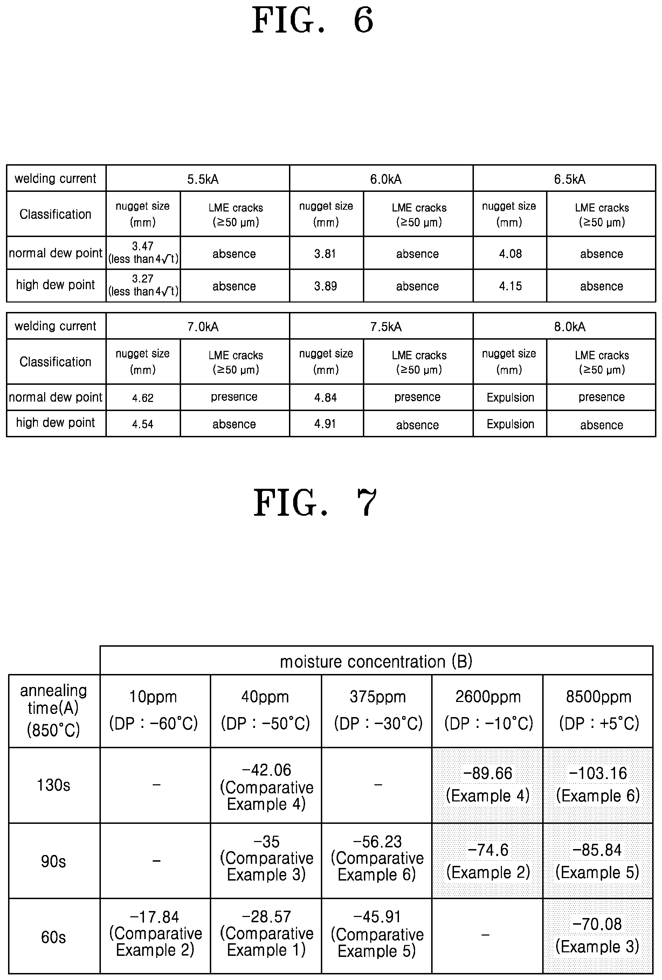

Table 5 shows conditions of the spot welding process in the first experimental example, and FIG. 6 shows results of applying the spot welding process in the first experimental example. In FIG. 6, the dew point means a dew point according to a moisture concentration in the annealing furnace. A normal dew point means a dew point of less than -45°C (for example, -50°C), and a high dew point means a dew point of 0°C.

In the first experimental example, an evaluation method of liquid metal embrittlement (LME) was as follows. First, two plies of the same material were prepared and tilted by 5 degrees, and then a maximum welding current causing no spatter phenomenon was applied. A cross section of the welded material was observed, and a maximum depth at which a crack was generated was determined as a maximum LME depth. In general, an LME crack is known to impair soundness of a welded portion when it exceeds 5% of a thickness of the material. In the present experimental example, a 1 mm material was used, and when the crack exceeded 50 µm, it was determined to be defective in the LME evaluation.

**Table 5**

| Weld Control | electrode tip | electrode force | No. of Pulses | welding time | hold time |
|---|---|---|---|---|---|
| DC | ϕ6mm | 3.5kN | 1 | 350ms | 100ms |

Referring to Table 5 and FIG. 6, in the method for manufacturing the plated steel sheet according to the comparative example of the present invention, annealing treatment was performed at a dew point of less than -45°C, and an applicable welding current range was 6.0 kA to 6.5 kA. In contrast, in the method for manufacturing the ultra-high-strength plated steel sheet having excellent weldability according to the example of the present invention, annealing treatment was performed at a dew point of 0°C, and it may be confirmed that the applicable welding current range was 6.0 kA to 7.5 kA. Accordingly, it may be confirmed that, in the method for manufacturing the ultra-high-strength plated steel sheet having excellent weldability according to the example of the present invention, the surface-layer austenite phase causing an LME crack in a welded portion is suppressed, thereby securing strength even under existing welding conditions, widening the total applicable welding current range, and enabling suppression of defects in the spot welding process.

### Second Experimental Example

Table 8 shows, in a second experimental example of the present invention, a thickness of a decarburized layer and whether liquid metal embrittlement (LME) occurs according to annealing time and annealing moisture in a galvannealed steel sheet implemented by applying the composition of Table 6 and process conditions of Table 7. In the second experimental example, an alloying temperature of the zinc plating treatment was 530°C.

**Table 6**

| Component | C | Si | Mn | P | S | Fe |
|---|---|---|---|---|---|---|
| Content | 0.15 | 2.0 | 2.5 | 0.01 | 0.003 | Bal |

**Table 7**

| | |
|---|---|
| Hot-rolling process | Reheating temperature: 1200°C, Finish rolling temperature: 900°C, Coiling temperature: 600°C |
| Heat-treatment process | Annealing temperature: 850°C, Slow-cooling temperature: 700°C, Rapid-cooling temperature: 250°C, Reheating temperature: 460°C |

**Table 8**

| | annealing temp. | annealing time | annealing atmosphere for the cold-rolled steel sheet | | | cold-rolled steel | weld |
|---|---|---|---|---|---|---|---|
| | | | hydrogen concentration | dew point in the furnace | H₂O concentra-tion in the furnace | decarburized layer thickness | LME occurrence rate |
| Comparative Example 1 | 850°C | 60s | 5 ~ 7% | -50°C | 40ppm | 0 *µ*m | 100% |
| Comparative Example 2 | 850°C | 60s | 5 ~ 7% | -60°C | 10ppm | 0 *µ*m | 100% |
| Comparative Example 3 | 850°C | 90s | 5 ~ 7% | -50°C | 40ppm | 0 *µ*m | 100% |
| Comparative Example 4 | 850°C | 130s | 5 ~ 7% | -50°C | 40ppm | 5 *µ*m | 80% |
| Comparative Example 5 | 850°C | 60s | 5 ~ 7% | -30°C | 375ppm | 0 *µ*m | 100% |
| Comparative Example 6 | 850°C | 90s | 5 ~ 7% | -30°C | 375ppm | 7 *µ*m | 30% |
| Example 2 | 850°C | 90s | 5 ~ 7% | -10°C | 2600ppm | 22 *µ*m | 0% |
| Example 3 | 850°C | 60s | 5 ~ 7% | +5°C | 8500ppm | 24 *µ*m | 0% |
| Example 4 | 850°C | 130s | 5 ~ 7% | -10°C | 2600ppm | 30 *µ*m | 0% |
| Example 5 | 850°C | 90s | 5 ~ 7% | +5°C | 8500ppm | 31 *µ*m | 0% |
| Example 6 | 850°C | 130s | 5 ~ 7% | +5°C | 8500ppm | 34*µ*m | 0% |

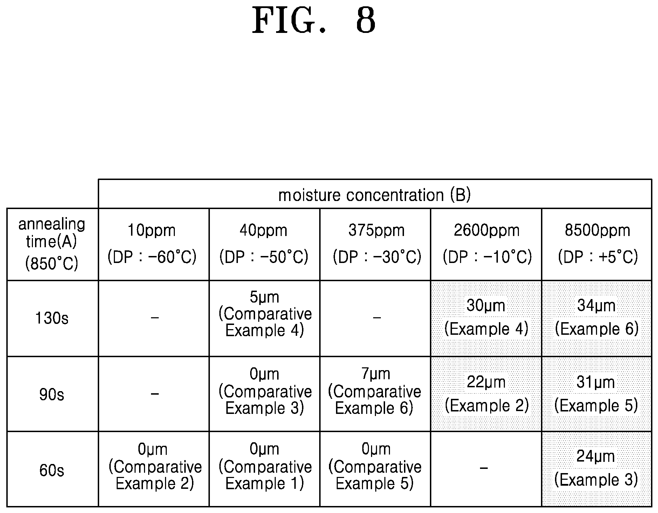

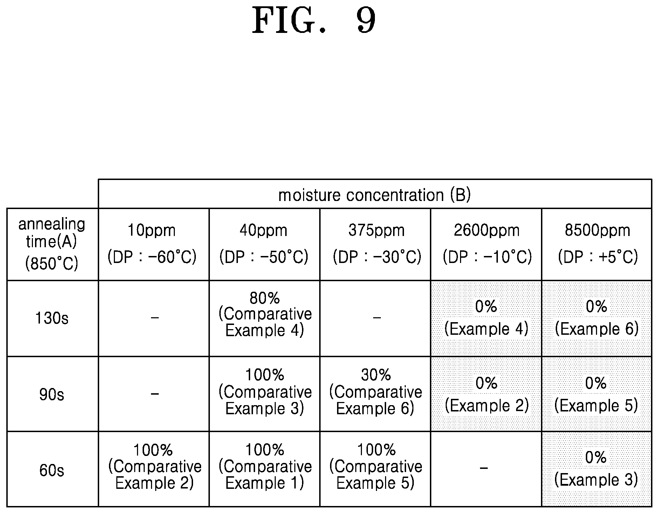

FIG. 7 is a table showing a product of a square root of an annealing time, A^{1/2} and a value obtained by taking a natural logarithm of a reciprocal value of a moisture concentration, ln(1/B) in an annealing furnace in the Second Experimental Example of the present invention, FIG. 8 is a table showing a thickness of a decarburized layer formed on a surface layer of a steel sheet according to the annealing time (A) and the moisture concentration (B) in the annealing furnace in the Second Experimental Example of the present invention, and FIG. 9 is a table showing an occurrence rate of liquid metal embrittlement (LME) according to the annealing time (A) and the moisture concentration (B) in the annealing furnace in the Second Experimental Example of the present invention. For reference, in FIG. 7, the unit of the annealing time (A) is seconds (s), and the unit of the moisture concentration (B) is ppm. Referring to Table 6 and FIGS. 7 to 9, when the annealing heat treatment step is performed under conditions in which the annealing time (A) and the moisture concentration (B) in the annealing furnace satisfy Equation 3 below (Examples 2 to 6 ), it can be confirmed that: i) when the plated steel sheet is welded, a possibility of occurrence of liquid metal embrittlement (LME), in which the zinc plating layer melts and penetrates into a surface of the steel sheet to cause embrittlement, is 0%; and ii) the thickness of the decarburized layer formed on the surface layer of the steel sheet is 10 µm or more. ${\left(A\right)}^{1 / 2} \times ln \left(1/B\right) \leq - 65$ Equation 3

In contrast, when the annealing step is performed under conditions in which the annealing time (A) and the moisture concentration (B) in the annealing furnace do not satisfy Equation 3 above (Comparative Examples 1 to 6), it may be confirmed that (i) a possibility of occurrence of liquid metal embrittlement (LME), in which a zinc plating layer melts and penetrates into the surface of the steel sheet during welding of the plated steel sheet to induce brittleness, appears at a meaningful level, and (ii) the thickness of the decarburized layer formed on the surface layer of the steel sheet is less than 10 µm.

That is, it may be confirmed that, in the method for manufacturing the ultra-high-strength plated steel sheet having excellent weldability, the annealing heat treatment may be controlled such that, as the annealing time (A) becomes shorter, the moisture concentration (B) in the annealing furnace becomes higher, and such that, as the moisture concentration (B) in the annealing furnace becomes lower, the annealing time (A) becomes longer.

Accordingly, in the method for manufacturing the ultra-high-strength plated steel sheet having excellent weldability according to one aspect of the present invention, in annealing the cold-rolled steel sheet in the annealing furnace, it may be understood that the annealing time (A) and the moisture concentration (B) in the annealing furnace may be controlled on the basis of a product of a square root of the annealing time, A^{1/2} and a natural logarithm value of a reciprocal of the moisture concentration, ln(1/B).

As described above, the first parameter disclosed in Equation 3 above, expressed as a product of a square root of the annealing time, A^{1/2}, and a natural logarithm value of a reciprocal of the moisture concentration, ln(1/B), may be said to have technical significance as a factor capable of simultaneously and effectively controlling both the thickness of the decarburized layer and an occurrence rate of liquid metal embrittlement (LME) in the ultra-high-strength plated steel sheet. For example, in Comparative Example 3, Comparative Example 6, Example 2, and Example 5, values of the square root of the annealing time (A), A^{1/2}, are the same, but since the thickness of the decarburized layer varies significantly depending on the natural logarithm value of a reciprocal of the moisture concentration (B), ln(1/B), it may be confirmed that neither the annealing time (A) alone nor the moisture concentration (B) alone can simultaneously and effectively control both the thickness of the decarburized layer and the occurrence rate of liquid metal embrittlement (LME). In this regard, the first parameter described above has a better effect and a causal relationship, and is not merely a different way of expressing known physical properties, and thus may be said to have technical significance.

Meanwhile, referring to Table 8, it may be confirmed that, as the dew point becomes higher and the annealing time becomes longer, a decarburization amount increases and an LME avoidance ability becomes excellent. In order to improve liquid metal embrittlement (LME), it may be necessary to secure a decarburized layer thickness of 10 µm or more.

While the present invention has been described above with reference to embodiments of the present invention, various modifications and variations may be made by those skilled in the art. Such modifications and variations will belong to the present invention as long as they do not depart from the scope of the present invention. Therefore, the scope of the present invention should be defined by the claims set forth below.

## Claims

1. An ultra-high-strength plated steel sheet comprising:
a steel sheet including an inner layer portion and a surface layer portion on the inner layer portion; and
a plating layer on the steel sheet,
wherein the inner layer portion comprises, in wt%, carbon (C): 0.1% to 0.3%, silicon (Si): 1.0% to 2.0%, manganese (Mn): 2.5% to 3.5%, phosphorus (P): more than 0% and not more than 0.02%, and sulfur (S): more than 0% and not more than 0.01%, with a balance of iron (Fe) and other unavoidable impurities, and a final microstructure of the inner layer portion has an area fraction of tempered martensite of 50% or more,
wherein the surface layer portion has a carbon content lower than a carbon content of the inner layer portion and comprises, in wt%, silicon (Si): 1.0% to 2.0%, manganese (Mn): 2.5% to 3.5%, phosphorus (P): more than 0% and not more than 0.02%, and sulfur (S): more than 0% and not more than 0.01%, with a balance of iron (Fe) and other unavoidable impurities, and a final microstructure of the surface layer portion has an area fraction of tempered martensite of 10% or less.

2. The ultra-high-strength plated steel sheet according to claim 1, wherein the surface layer portion has a thickness of 10 µm to 50 µm from a surface of the steel sheet.

3. The ultra-high-strength plated steel sheet according to claim 1, wherein the plated steel sheet has a yield strength of 850 MPa or more and 1070 MPa or less, a tensile strength of 1180 MPa or more and less than 1470 MPa, and an elongation of 14% or more.

4. The ultra-high-strength plated steel sheet according to claim 1, wherein the surface layer portion has a carbon content of 10% or less of the carbon content of the inner layer portion.

5. The ultra-high-strength plated steel sheet according to claim 1,
wherein the final microstructure of the inner layer portion includes, in area fraction, tempered martensite: 50% to 75%, ferrite: 5% to 25%, and retained austenite: 10% to 30%, and
wherein the final microstructure of the surface layer portion includes, in area fraction, tempered martensite: more than 0% and not more than 10%, and ferrite: 90% or more and less than 100%.

6. The ultra-high-strength plated steel sheet according to claim 1, wherein, when spot welding is performed on the plated steel sheet under conditions of a welding electrode tip diameter of 6 mm, an electrode force of 3.5 kN, and a welding current of 6.0 kA to 7.5 kA, a maximum length of a liquid metal embrittlement (LME) crack in the steel sheet is 50 µm or less.

7. A method for manufacturing an ultra-high-strength plated steel sheet, the method comprising:
a first step of providing a steel sheet including an inner layer portion and a surface layer portion on the inner layer portion; and
a second step of forming a plating layer on the steel sheet,
wherein the inner layer portion comprises, in wt%, carbon (C): 0.1% to 0.3%, silicon (Si): 1.0% to 2.0%, manganese (Mn): 2.5% to 3.5%, phosphorus (P): more than 0% and not more than 0.02%, and sulfur (S): more than 0% and not more than 0.01%, with a balance of iron (Fe) and other unavoidable impurities, and a final microstructure of the inner layer portion has an area fraction of tempered martensite of 50% or more,
wherein the surface layer portion has a carbon content lower than a carbon content of the inner layer portion and comprises, in wt%, silicon (Si): 1.0% to 2.0%, manganese (Mn): 2.5% to 3.5%, phosphorus (P): more than 0% and not more than 0.02%, and sulfur (S): more than 0% and not more than 0.01%, with a balance of iron (Fe) and other unavoidable impurities, and a final microstructure of the surface layer portion has an area fraction of tempered martensite of 10% or less.

8. The method according to claim 7, wherein the plated steel sheet has a yield strength of 850 MPa or more and 1070 MPa or less, a tensile strength of 1180 MPa or more and less than 1470 MPa, and an elongation of 14% or more.

9. The method according to claim 7, wherein the first step sequentially includes:
providing a steel material comprising, in wt%, carbon (C): 0.1% to 0.3%, silicon (Si): 1.0% to 2.0%, manganese (Mn): 2.5% to 3.5%, phosphorus (P): more than 0% and not more than 0.02%, and sulfur (S): more than 0% and not more than 0.01%, with a balance of iron (Fe) and other unavoidable impurities;
hot rolling the steel material;
softening-heat-treating and pickling the hot-rolled steel material;
cold rolling the hot-rolled steel material;
annealing the cold-rolled steel material in an annealing furnace;
slowly cooling the annealed steel material at a first cooling rate; rapidly cooling the slowly cooled steel material at a second cooling rate greater than the first cooling rate; and reheating the rapidly cooled steel material,
wherein, in the annealing step, a dew point temperature in the annealing furnace is controlled to be -20°C to +20°C, a lower limit of an annealing temperature range is controlled to be a temperature 30°C lower than an Ac3 temperature of the inner layer portion, and an upper limit of the annealing temperature range is controlled to be an Ac3 temperature of the surface layer portion,
wherein the slowly cooling step is performed under conditions of the first cooling rate of 1 to 10°C/s and a cooling end temperature of 600°C or more and less than 800°C,
wherein the rapidly cooling step is performed under conditions of the second cooling rate of 30 to 100°C/s and a cooling end temperature of 150°C or more and less than 300°C, and
wherein the reheating step is performed under conditions of a holding time of 60 seconds or less at a temperature of more than 350°C and less than 500°C.

10. The method according to claim 7, wherein the surface layer portion has a carbon content of 10% or less of the carbon content of the inner layer portion and has a thickness of 10 µm to 50 µm from a surface of the steel sheet.

11. The method according to claim 9, wherein, after the annealing step, the steel sheet is divided into an inner layer portion and a surface layer portion on the inner layer portion, having different carbon contents from each other, the microstructure of the inner layer portion includes, in area fraction, austenite: 75% to 95% and ferrite: 5% to 25%, and the microstructure of the surface layer portion includes, in area fraction, austenite: more than 0% and not more than 10%, and ferrite: 90% or more and less than 100%,
wherein, after the slowly cooling step, the microstructure of the inner layer portion includes, in area fraction, austenite: 75% to 95% and ferrite: 5% to 25%, and the microstructure of the surface layer portion includes, in area fraction, austenite: more than 0% and not more than 10%, and ferrite: 90% or more and less than 100%,
wherein, after the rapidly cooling step, the microstructure of the inner layer portion includes, in area fraction, martensite: 50% to 75%, ferrite: 5% to 25%, and retained austenite: 10% to 30%, and the microstructure of the surface layer portion includes, in area fraction, martensite: more than 0% and not more than 10%, and ferrite: 90% or more and less than 100%, and
wherein, after the reheating step, the final microstructure of the inner layer portion includes, in area fraction, tempered martensite: 50% to 75%, ferrite: 5% to 25%, and retained austenite: 10% to 30%, and the final microstructure of the surface layer portion includes, in area fraction, tempered martensite: more than 0% and not more than 10%, and ferrite: 90% or more and less than 100%.

12. The method according to claim 7, wherein the hot rolling step is performed under conditions of a reheating temperature of 1150°C to 1250°C, a finish rolling temperature of 850°C to 1000°C, and a coiling temperature of 500°C to 700°C, and
wherein the step of softening-heat-treating the hot-rolled steel material includes performing softening heat treatment at a temperature of 500°C to 650°C.

13. The method according to claim 7, wherein the cold rolling step is performed under a reduction ratio of 40% to 60%.
